# EUROPEAN PATENT APPLICATION

(11) **EP 3 733 803 A1**
(43) Date of publication of application: **04.11.2020**
(21) Application number: 18893394.9
(22) Date of filing: 27.12.2018
(51) Int. Cl.: C09J 7/24, B32B 3/30, B32B 7/06, B32B 27/00, B32B 27/32, C09J 201/00

(54) **SEPARATOR, AND ADHESIVE TAPE OR SHEET WITH SEPARATOR**

(30) Priority: 28.12.2017 JP 2017254975
(71) Applicant: Nichiban Co., Ltd., Bunkyo-ku Tokyo 112-8663 (JP)
(72) Inventor: INAGAKI Tomoyuki, Tokyo 112-8663 (JP); KOGA Yukinori, Tokyo 112-8663 (JP)
(74) Representative: Ladendorf, Oliver
(86) International application number: PCT/JP2018/048104
(87) International publication number: WO 2019/131865

(57) **Abstract**

The present invention provides an adhesive tape or sheet with a separator comprising
an adhesive tape or sheet comprising a support layer and an adhesive layer laminated on the upper side of the support layer; and
a separator located on the upper side of the adhesive layer,
wherein
the separator has a three-layer structure in which a first A layer, a B layer, and a second A layer are laminated in this order from the lower side;
the first A layer and the second A layer are formed of the same type of unstretched polyolefin film, and the B layer is formed of a biaxially stretched polyolefin film; and
the thickness of the first A layer is 70% or more and 130% or less of the thickness of the second A layer.

## Description

### Technical Field

The present invention relates to a separator having excellent heat resistance, concave/convex formability, and recyclability, and having the occurrences of curling and undulation well-reduced; and an adhesive tape or sheet with a separator which comprises the separator.

### Background Art

An adhesive tape etc. with a separator comprising an adhesive tape or sheet (hereinafter, sometimes referred to as "adhesive tape etc.") comprising a support layer and an adhesive layer located on the upper side of the support layer; and a separator (also referred to as "release liner") located on the upper side of the adhesive layer is on the market. As for the separator herein, a separator in which a polyolefin layer is laminated on a surface of a core material made of paper is widely used. However, there are problems that curling occurs when the paper absorbs moisture, and recyclability is poor because the core material made of paper and the olefin layer cannot be separated. Therefore, studies of separators in which a core material made of paper is not used have been conducted.

As an adhesive tape etc. with a separator in which a core material made of paper is not used in the separator, Patent Literature 1 discloses a pressure-sensitive adhesive sheet with a separator comprising a pressure-sensitive adhesive sheet comprising a support layer and a pressure-sensitive adhesive layer held on the support layer; and a separator (release liner) located on the pressure-sensitive adhesive layer and consisting of a polypropylene-based resin sheet, wherein the resin sheet has a laminate structure in which the resin sheet comprises an A layer formed from a polypropylene-based resin composition (a) comprising a nucleating agent; and a B layer formed from a polypropylene-based resin composition (b) comprising no nucleating agent, for example.

Meanwhile, studies have been conducted for methods in which a concave/convex shape is formed on the lower surface of the separator and the concave/convex shape is transferred onto the adhesive layer so as to facilitate the escape of fluids such as gases and liquids flowing into the gap between the adhesive tape etc. and the adherend when the adhesive tape etc. is attached to the adherend (See Patent Literature 2 and Patent Literature 3, for example.).

### Citation List

### Patent Literature

Patent Literature 1: JP-A-2008-222757
Patent Literature 2: JP-A-2004-506777
Patent Literature 3: JP-A-2006-028416

### Summary of Invention

### Technical Problem

However, the pressure-sensitive adhesive sheet with the separator described in Patent Literature 1 is formed of the layer comprising a nucleating agent and the layer comprising no nucleating agent, and the two layers have different thermal properties; therefore, curling and undulation (phenomenon in which the shape changes into wave) may occur in the separator when heat processing is performed, which may hinder a user from peeling the separator from the adhesive sheet, and curling and undulation may occur in the adhesive sheet in association with the occurrences of curling and undulation in the separator, which may hinder the attachment of the adhesive sheet. In addition, even though the heat resistance is improved by the nucleating agent, the separator described in Patent Literature 1 which has a two-layer structure may not have adequate heat resistance; therefore, the separator may shrink by heat when a silicone-based release agent is applied thereon so as to improve the peelability or when hot embossing is performed so as to form a concave/convex shape on the surface (usually at 140°C or higher), and the occurrence of heat shrinkage may hinder the formation of the concave and convex in the separator.

Accordingly, the present invention was made in view of the problems as described above, and an object thereof is to provide a separator having excellent heat resistance, concave/convex formability, and recyclability, and having the occurrences of heat shrinkage, curling, and undulation well-reduced; and an adhesive tape or sheet with a separator which comprises the separator.

### Solution to Problem

In view of the problems as described above, the inventors of the present invention have conducted studies diligently. As a result, they have found that the above-described problems can be solved by making a separator having a three-layer structure and adjusting the type and the thickness of the film for each layer, and thereby completed the present invention. Specifically, the present invention provides the following.
(1) The first aspect of the present invention is an adhesive tape or sheet with a separator comprising
   an adhesive tape or sheet comprising a support layer and an adhesive layer laminated on the upper side of the support layer; and
   a separator located on the upper side of the adhesive layer,
   wherein
   the separator has a three-layer structure in which a first A layer, a B layer, and a second A layer are laminated in this order from the lower side;
   the first A layer and the second A layer are formed of the same type of unstretched polyolefin film, and the B layer is formed of a biaxially stretched polyolefin film; and
   the thickness of the first A layer is 70% or more and 130% or less of the thickness of the second A layer.
(2) The second aspect of the present invention is the adhesive tape or sheet with the separator as described in (1), which is characterized in that the first A layer and the second A layer are formed of the same type of unstretched polypropylene film.
(3) The third aspect of the present invention is the adhesive tape or sheet with the separator as described in (1) or (2), which is characterized in that the B layer is formed of a biaxially stretched polypropylene film.
(4) The fourth aspect of the present invention is the adhesive tape or sheet with the separator as described in any one of (1) to (3), which is characterized in that the sum of the thicknesses of the first A layer, the B layer, and the second A layer is 50µm or more and 500µm or less.
(5) The fifth aspect of the present invention is the adhesive tape or sheet with the separator as described in any one of (1) to (4), which is characterized in that the sum of the thicknesses of the first A layer and the second A layer is 20% or more and 90% or less relative to the sum of the thicknesses of the first A layer, the B layer, and the second A layer.
(6) The sixth aspect of the present invention is the adhesive tape or sheet with the separator as described in any one of (1) to (5), which is characterized in that a straight and/or curved convex portion is formed on the lower surface of the first A layer.
(7) The seventh aspect of the present invention is the adhesive tape or sheet with the separator as described in (6), which is characterized in that
   a grid pattern is formed on the lower surface of the first A layer by the intersecting straight convex portions;
   the shape of each grid in the grid pattern is any one of a square, a rectangle, a parallelogram, and a rhombus;
   the height of the convex portion is 1µm or more and 20µm or less;
   the cross-sectional width of the convex portion is 1µm or more and 50µm or less; and
   the distance between the convex portions facing each other in each grid is 100µm or more and 1000µm or less.
(8) The eighth aspect of the present invention is the adhesive tape or sheet with the separator as described in (7), which is characterized in that the shape of each grid is a parallelogram or a rhombus; and the length of the long side of the diagonal line in each grid is 130% or more and 200% or less relative to the length of the short side of the diagonal line.
(9) The ninth aspect of the present invention is the adhesive tape or sheet with the separator as described in any one of (6) to (8), which is characterized in that a straight and/or curved convex portion is further formed on the upper surface of the second A layer; and an adhesive layer and a support layer are laminated in this order on the upper side of the second A layer.
(10) The tenth aspect of the present invention is the adhesive tape or sheet with the separator as described in any one of (1) to (9), which is characterized in that a silicone-based release treatment agent is applied at least on the lower surface of the first A layer.
(11) The eleventh aspect of the present invention is a separator to be located on the upper side of the adhesive layer of an adhesive tape or sheet comprising a support layer and the adhesive layer laminated on the upper side of the support layer,
   wherein
   the separator has a three-layer structure in which a first A layer, a B layer, and a second A layer are laminated in this order from the lower side;
   the first A layer and the second A layer are formed of the same type of unstretched polyolefin film, and the B layer is formed of a biaxially stretched polyolefin film; and
   the thickness of the first A layer is 70% or more and 130% or less of the thickness of the second A layer.
(12) The twelfth aspect of the present invention is the separator as described in (11), which is characterized in that a straight and/or curved convex portion is formed on the lower surface of the first A layer.
(13) The thirteenth aspect of the present invention is the separator as described in (12), which is characterized in that a straight and/or curved convex portion is further formed on the upper surface of the second A layer.

### Advantageous Effects of Invention

According to the present invention, there may be provided a separator having excellent heat resistance, concave/convex formability, and recyclability, and having the occurrences of heat shrinkage, curling, and undulation well-reduced; and an adhesive tape or sheet with a separator which comprises the separator, because the separator in the adhesive tape or sheet with the separator of the present invention has a three-layer structure in which a first A layer, a B layer, and a second A layer are laminated in this order from the lower side; the first A layer and the second A layer are formed of the same type of unstretched polyolefin film, and the B layer is formed of a biaxially stretched polyolefin film; and the thickness of the first A layer is 70% or more and 130% or less of the thickness of the second A layer.

### Brief Description of Drawings

Fig. 1 is a sectional view of the adhesive tape or sheet with the separator of the present invention.
Fig. 2 is a schematic diagram showing an example of a grid pattern according to the present invention, which is formed on the adhesive layer-side surface of the first A layer by the intersecting straight convex portions.
Fig. 3 is a sectional view of the adhesive tape or sheet with the separator of the present invention in another embodiment.

### Description of Embodiments

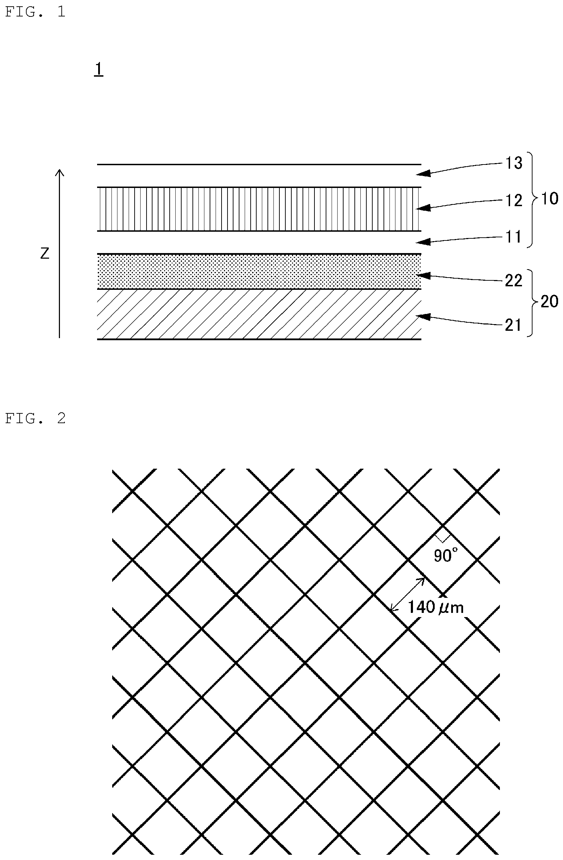

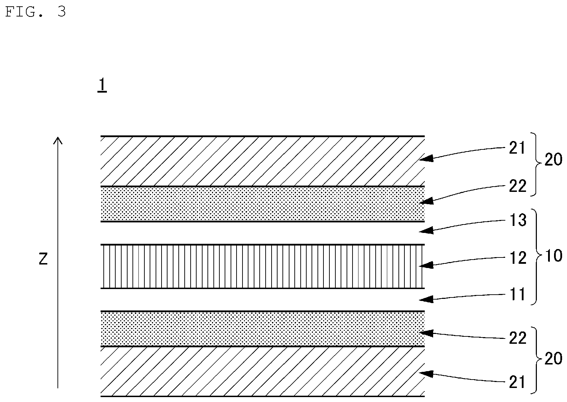

Hereinafter, embodiments for carrying out the present invention will be described in detail with reference to the drawings. The adhesive tape or sheet also includes what is referred to as an adhesive label or an adhesive film. In the descriptions of the present specification, the "upper side" refers to the direction in which the first A layer, the B layer, and the second A layer are sequentially laminated in the direction of the thickness of the adhesive tape or sheet with the separator of the present invention, that is, the direction indicated by the arrow Z shown in Fig. 1 and Fig. 3; and the "lower side" refers to the direction opposite to the upper side in the direction of the thickness.

### <Adhesive Tape or Sheet with Separator>

Fig. 1 is a sectional view of the adhesive tape or sheet with the separator 1 of the present invention. As shown in Fig. 1, the adhesive tape or sheet with the separator 1 of the present invention comprises the adhesive tape or sheet 20 comprising the support layer 21 and the adhesive layer 22 laminated on the upper side of the support layer 21; and the separator 10 located on the upper side of the adhesive layer 22. A user peels the separator 10 from the adhesive tape or sheet 20 and attaches the adhesive layer 22 to an adherend. Although the use of the adhesive tape or sheet with the separator 1 of the present invention is not particularly limited, it may be suitably used for an outdoor sign material, a large sticker, a nameplate label, a chipping-resistant sheet which protects various surfaces from the phenomenon in which a small stone, a small object, or the like on the road surface is bounced up by the wheel and collides against the car body to damage the painted surface of the car body during the running of the car, a protective sheet for a glass window or a smartphone, and the like.

### [Separator]

In the present invention, as shown in Fig. 1, the separator 10 has a three-layer structure in which the first A layer 11, the B layer 12, and the second A layer 13 are laminated in this order from the lower side. As described below, however, each of the first A layer 11, the B layer 12, and the second A layer 13 may comprise two or more layers. When the separator 10 has such a three-layer structure, the heat resistance of the separator 10 may be improved and the occurrences of heat shrinkage, curling, and undulation may be reduced as compared with the case where the separator has a single-layer or a two-layer structure. The three-layer structure as described above may be formed by a conventionally known laminating process such as heat laminating process, dry laminating process, and wet laminating process.

### (Material for Separator)

In addition, the first A layer 11 and the second A layer 13 are formed of the same type of unstretched polyolefin film, and the B layer 12 is formed of a biaxially stretched polyolefin film. Each of the first A layer 11 and the second A layer 13 may be formed of two or more unstretched polyolefin films. The B layer 12 may be also formed of two or more biaxially stretched polyolefin films. The unstretched polyolefin films or the biaxially stretched polyolefin films laminated in each of the first A layer 11, the second A layer 13, and the B layer 12 may be the same type, or may be different types. It is preferred, however, that the types and the lamination orders (the orders of lamination to the B layer 12) of the unstretched polyolefin films laminated in the first A layer 11 and the second A layer 13 are the same. When an unstretched polyolefin film having excellent hot embossability (thermoplasticity) is used for the upper and lower sides of the B layer 12 which is the middle layer, and a biaxially stretched polyolefin film having excellent heat resistance and physical strength is used for the B layer 12 which is the middle layer in the three-layer structure as described above, the heat resistance may be improved and the occurrences of heat shrinkage, curling, and undulation in the separator 10 may be reduced even without using a nucleating agent. In addition, when polyolefin films are used for all the layers in the three-layer structure, the recyclability may be improved as compared with a separator in which a polyolefin layer is laminated on a surface of a core material made of paper and a separator in which a polyethylene terephthalate film and a polyolefin film are used, for example.

As the same type of unstretched polyolefin film of which the first A layer 11 and the second A layer 13 are formed, an unstretched polypropylene (Cast polypropylene: also referred to as "CPP") film, an unstretched low-density polyethylene (also referred to as "LDPE") film, an unstretched linear low-density polyethylene (also referred to as "LLDPE") film, an unstretched high-density polyethylene (also referred to as "HDPE") film, and the like may be used. Any of an unstretched polypropylene film, an unstretched low-density polyethylene film, and a linear low-density polyethylene film which are suitable for hot embossability (thermoplasticity) is preferably used, and among them, an unstretched polypropylene film which may have both heat resistance at a hot embossing temperature (usually at 140°C or higher) and hot embossability (thermoplasticity) is more preferably used.

As the biaxially stretched polyolefin film of which the B layer 12 is formed, a biaxially stretched polypropylene (Oriented polypropylene: also referred to as "OPP") film which has excellent heat resistance and physical strength is preferably used.

### (Thickness of Separator)

The thickness of the first A layer 11 is preferably 70% or more and 130% or less, more preferably 80% or more and 120% or less, more preferably 90% or more and 105% or less of the thickness of the second A layer 13. It is preferred that the thickness of the first A layer 11 to the second A layer 13 is within the above-described range, because the difference in residual stress at a high temperature between the first A layer 11 and the second A layer 13 is large, and heat shrinkage, curling, and undulation are apt to occur in the separator 10 when the difference between the thickness of the first A layer 11 and the thickness of the second A layer 13 is too large. Each of the thickness of the first A layer 11 and the thickness of the second A layer 13 herein is the average thickness of the layer, and is the sum of the average thicknesses of the layers when the first A layer 11 or the second A layer 13 comprises two or more layers (two or more unstretched polyolefin films are laminated). In addition, when a straight and/or curved convex portion is formed on the surface, each of the thickness of the first A layer 11 and the thickness of the second A layer 13 refers to the average thickness of the portion other than the convex portion. When a straight and/or curved convex portion is formed on the surface by hot embossing, for example, the thickness of the portion other than the convex portion is usually almost the same as the thickness of the film before the hot embossing. Thus, when a straight and/or curved convex portion is formed on the surface by hot embossing, the average thickness of the film of the first A layer 11 or the second A layer 13 before the hot embossing may be regarded as the thickness of the first A layer 11 or the thickness of the second A layer 13.

In addition, the sum of the thicknesses of the first A layer 11, the B layer 12, and the second A layer 13 is preferably 50µm or more and 500µm or less from the viewpoint of improving the heat resistance of the separator 10 and reducing the occurrences of curling and undulation. In addition, from the same viewpoint, the sum of the thicknesses of the first A layer 11 and the second A layer 13 is preferably 20% or more and 90% or less, more preferably 30% or more and 80% or less relative to the sum of the thicknesses of the first A layer 11, the B layer 12, and the second A layer 13. The thickness of the B layer 12 herein is the average thickness of the layer, and is the sum of the average thicknesses of the layers when the B layer 12 comprises two or more layers (two or more biaxially stretched polyolefin films are laminated) in the same way as the thickness of the first A layer 11 and the thickness of the second A layer 13 as described above.

### (Convex Portion)

In the present invention, it is preferred that a straight and/or curved convex portion is formed on the lower surface of the first A layer 11. A straight and/or curved concave portion is formed on the adhesive layer 22 by pressing the straight and/or curved convex portion as described above onto the adhesive layer 22, and therefore the escape of fluids such as gases and liquids flowing into the gap between the adhesive tape or sheet 20 and an adherend when the adhesive tape or sheet 20 is peeled from the separator 10 and attached to the adherend may be facilitated. The cross-sectional shape of the straight and/or curved convex portion as described above is not particularly limited, and may be a semicircular shape, an inverted U shape, a rectangular shape, a trapezoidal shape, an inverted V shape, or the like.

Although the method for forming the straight and/or curved convex portion is not particularly limited, hot embossing is preferably used. In the present invention, herein, the first A layer 11 is formed of an unstretched polyolefin film, and the unstretched polyolefin film has excellent hot embossability (thermoplasticity), as described above, and therefore the straight and/or curved convex portion may be formed well. Among them, an unstretched polypropylene film which may have both heat resistance at a hot embossing temperature (usually at 140°C or higher) and hot embossability (thermoplasticity) is less likely to shrink by heat even when heat is applied during the formation of the convex portion, and the straight and/or curved convex portion may be formed better.

### (Grid Pattern)

Fig. 2 is a schematic diagram showing an example of a grid pattern according to the present invention, which is formed on the lower surface of the first A layer 11 by the intersecting straight convex portions. In the present invention, it is particularly preferred that a grid pattern is formed on the lower surface of the first A layer 11 by the intersecting straight convex portions. When the grid pattern is formed, a concave portion is formed in the form of a grid by pressing the grid pattern as described above onto the adhesive layer 22, and therefore the escape of fluids such as gases and liquids flowing into the gap between the adhesive tape or sheet 20 and an adherend when the adhesive tape or sheet 20 is attached to the adherend may be more effectively facilitated.

In addition, it is preferred that the shape of each grid in the grid pattern is any one of a square, a rectangle, a parallelogram, and a rhombus; the height (maximum height) of the convex portion is 1µm or more and 20µm or less; the cross-sectional width (maximum width) of the convex portion is 1µm or more and 50µm or less; and the distance between the convex portions facing each other in each grid is 100µm or more and 1000µm or less. (Fig. 2 shows an embodiment in which the shape of each grid is a square, and the distance between the convex portions facing each other in each grid is 140µm.) Thereby, the escape of fluids such as gases and liquids flowing into the gap between the adhesive tape or sheet 20 and an adherend when the adhesive tape or sheet 20 is attached to the adherend may be more effectively facilitated. It is preferred that the length of the long side of the diagonal line in each grid is 130% or more and 200% or less relative to the length of the short side of the diagonal line when the shape of each grid is a parallelogram or a rhombus.

The method for forming the straight and/or curved concave portion on the adhesive layer 22 (or the method for forming the adhesive layer 22 having the straight and/or curved concave portion) is not particularly limited, and it may be formed by the following method. Examples thereof include
a method in which the straight and/or curved concave portion is formed on the adhesive layer 22 by pressing the first A layer 11 of the separator 10 onto the adhesive layer 22, as the straight and/or curved convex portion is formed on the surface of the first A layer 11 of the separator 10, as described above; or
a method in which the adhesive layer 22 having the straight and/or curved concave portion is formed by applying an adhesive solution on the surface of the first A layer 11 having the straight and/or curved convex portion; or the like.

A straight and/or curved concave portion is formed on the adhesive layer 22 in this way, and therefore the escape of fluids such as gases and liquids flowing into the gap between the adhesive tape or sheet 20 and an adherend when the adhesive tape or sheet 20 is attached to the adherend may be facilitated.

### (Release Treatment Agent)

In addition, it is preferred that a release treatment agent is applied at least on the lower surface of the first A layer 11 so as to improve the peelability of the separator 10 from the adhesive tape or sheet 20. As the release treatment agent, a silicone-based, fluorine-based, or long-chain alkyl-based release treatment agent is preferably used, and a silicone-based release treatment agent is more preferably used because it is widely and commonly used and is inexpensive, and also has excellent heat resistance. The silicone-based release agents herein may be classified into thermal-curable and UV-curable, and in the case where a thermal-curable silicone-based release treatment agent is used, heating at a high temperature (usually at 120°C or higher) is required for the complete curing. In the present invention, as described above, the first A layer 11 on which a release treatment agent is applied is formed of an unstretched polyolefin film, and the second layer 12 is formed of a biaxially stretched polyolefin. The unstretched polyolefin film has excellent hot embossability (thermoplasticity), while the biaxially stretched polyolefin has excellent heat resistance and physical strength, and therefore heat shrinkage, curling, and undulation are less likely to occur in the separator 10 even when a thermal-curable silicone-based release treatment agent is used.

### [Support Layer]

The base substrate of the support layer 21 is not particularly limited, and a plastic film, an unwoven fabric, a paper, a cloth, a metal foil, or the like, or a composite thereof, or the like may be used, for example, and may be produced by molding the material by extrusion molding, cast molding, rolling, or the like, or laminating the molded products by lamination, or the like. Although the thickness of the support layer 21 is not particularly limited, it is preferably 100µm or more and 500µm or less from the viewpoint of cost and processability.

The material for the base substrate of the support layer 21 is not particularly limited, and one type of, or a combination of two or more types of various materials, including polyolefin-based materials such as polyethylene, polypropylene, ethylene-propylene copolymer, ethylene-1-butene copolymer, ethylene-octene copolymer, ethylene-vinyl acetate copolymer, and ethylene-vinyl alcohol copolymer; polyvinyl alcohol-based materials; acrylic-based materials such as polymethyl methacrylate; polyester-based materials such as polyethylene terephthalate, and polybutylene terephthalate; polyamide-based materials such as nylon 6, and nylon 6,6; various ionomer-based materials containing metal ions such as zinc and sodium in the structure; styrene-based materials such as polystyrene, styreneisoprene copolymer, and styrene-butadiene copolymer; polyurethane-based materials; vinyl chloride-based materials; fluorine-based materials; cellulose-based materials such as acetate, and cellophane; rayon; cotton; and the like; and metals such as aluminum, copper, silver, gold, tin, and stainless; and the like, for example, may be used.

In addition, when the high appearance is required, a plastic film (one layer, or a laminate of two or more layers) which is easy to have a surface flat and smooth is preferably used as the base substrate of the support layer 21 so as to reduce the surface roughness of the adhesive layer 22 onto which the surface shape is transferred.

### [Adhesive Layer]

The adhesive used for the adhesive layer 22 is not particularly limited, and various adhesives such as rubber-based, acrylic-based, urethane-based, and silicone-based adhesives may be used, for example. Although the thickness of the adhesive layer 22 is not particularly limited, it is preferably 10µm or more and 200µm or less from the viewpoint of cost and processability.

Examples of the method for forming the adhesive layer 22 include, but not limited to,
a method in which "a solvent-based adhesive solution in which an adhesive is dissolved in an organic solvent, an emulsion-based adhesive solution in which an adhesive is dispersed in water, or the like in a low-viscosity state is applied on the support layer 21, and the viscosity is increased by drying";
a method in which "a solvent-free adhesive in a state where the viscosity is decreased by heating is applied on the support layer 21, and the viscosity is increased by cooling";
a method in which "an adhesive in a state where the viscosity is low immediately after the two liquids are mixed is applied on the support layer 21, and the viscosity is increased by the reaction"; and the like,
and
a method in which "a solvent-based adhesive solution in which an adhesive is dissolved in an organic solvent, an emulsion-based adhesive solution in which an adhesive is dispersed in water, or the like in a low-viscosity state is applied on the separator 10, and the viscosity is increased by drying, and then the support layer 21 and the adhesive layer are laminated";
a method in which "a solvent-free adhesive in a state where the viscosity is decreased by heating is applied on the separator 10, and the viscosity is increased by cooling, and then the support layer 21 and the adhesive layer are laminated";
a method in which "an adhesive in a state where the viscosity is low immediately after the two liquids are mixed is applied on the separator 10, and the viscosity is increased by the reaction, and then the support layer 21 and the adhesive layer are laminated"; and
a method in which "the materials for the support layer 21 and the adhesive layer 22 in a state where the viscosities are decreased by heating are molded by multilayer co-extrusion",
and various methods may be used.

With regard to the adhesive tape or sheet with the separator 1 of the present invention, an embodiment in which a straight and/or curved convex portion is formed on the lower surface of the first A layer 11 has been described above. As for the adhesive tape or sheet with the separator 1 of the present invention, however, a straight and/or curved convex portion may be further formed on the upper surface of the second A layer 13 as described above, and an embodiment in which the adhesive layer 22 and the support layer 21 are laminated in this order on the upper side of the second A layer 13 as shown in Fig. 3 may be adopted. When the adhesive tape or sheet with the separator 1 of the present invention is such an embodiment, a concave portion can be formed on the adhesive layer 22 of each of two adhesive tapes or sheets 20 with one separator 10. When such an embodiment is adopted, the required separator is only one separator, and the cost may be reduced and the amount of the generated refuse may be reduced.

### [Others]

In addition, in the adhesive tape or sheet with the separator 1 of the present invention, various additives may be added to the support layer 21, the adhesive layer 22, and the separator 10 as necessary, as long as the object would not be impaired. Although the additive is not particularly limited, additives including ultraviolet absorbers and ultraviolet stabilizers such as hindered amine-based, hindered phenol-based, benzotriazole-based, benzophenone-based, benzoate-based, triazine-based, lactone-based, and phosphorus-based ultraviolet absorbers and ultraviolet stabilizers; antioxidants such as hindered-based, semihindered-based, phosphite-based, phosphonate-based, and thioether-based antioxidants; processing stabilizers such as metallic soap-based, organic tin-based, and lead-based processing stabilizers; surfactants; antistats such as cation-based, and non-ion-based antistats; inorganic fine particles such as synthetic silica-based, and silica-based inorganic fine particles; organic-inorganic fine particles such as silicone-acrylic-based organic-inorganic fine particles; organic fine particles such as acrylic-based, and melamine-based organic fine particles; lubricants such as stearic acid, stearic acid amide, calcium stearate, barium stearate, and zinc stearate; and the like, for example, may be added. A peelability imparting agent such as silicone-based, fluorine-based, and long-chain alkyl-based peelability imparting agents may be added to the surface other than the lower surface of the first A layer 11 as appropriate.

### [Method for Producing Adhesive Tape or Sheet with Separator]

The adhesive tape or sheet 1 with the separator of the present invention may be formed by the following method, although the method is not particularly limited. See above for the detailed conditions. Examples thereof include
a method in which the adhesive layer 22 is formed by applying an adhesive on the upper surface of the support layer 21, and then the separator 10 is laminated on the upper side of the adhesive layer 22;
a method in which the adhesive layer 22 is formed on the support layer 21 by melting and applying an adhesive between the support layer 21 and the separator 10; or
a method in which the adhesive layer 22 is formed by applying a melted adhesive on the surface of the separator 10 (the first A layer 11), and then the support layer 21 is laminated on the upper surface of the adhesive layer 22; or the like. From the viewpoint of efficiently forming the adhesive layer 22 having a stable thickness, a method in which the adhesive tape or sheet with the separator 1, which comprises the support layer 21, the adhesive layer 22, and the separator 10 in this order, is obtained by supplying and continuously applying an adhesive onto the surface of the separator 10 (the first A layer 11) which is continuously supplied and run to form the adhesive layer 22, and then laminating the support layer 21 on the upper surface of the adhesive layer 22 is preferably adopted. The adhesive tape or sheet 1 with the separator obtained by the method as described above is usually produced as an adhesive tape or sheet 1 in the form of being slit into a predetermined width and wound around a roll core material, and the adhesive tape or sheet 1 with the separator may be produced by cutting it into a shape such as an ellipse, a circle, a square, and a rectangle, and a predetermined size, depending on the intended use, or the like.

Although the present invention has been described above with reference to the embodiments, it goes without saying that the technical scope of the present invention is not limited to the scope of the invention as described above in the embodiments, and it will be apparent to those skilled in the art that various modifications or improvements can be added to the embodiments as described above. It is also apparent from the descriptions of the claims that the embodiments in which such a modification or an improvement is added may be included in the technical scope of the present invention.

### EXAMPLES

Hereinafter, the present invention will be described in detail with reference to Examples. However, the present invention is not limited to the Examples described below.

### <Examples 1 to 6, Comparative Examples 1 to 6>

The first A layer, the B layer, and the second A layer which had the configurations shown in Table 1 were laminated using a commercially available adhesive for dry lamination, and the silicone release treatment was performed on the first A layer, and then the separators of Examples 1 to 6 and Comparative Examples 1 to 6 which had a size of 10.0cm in the MD direction and 10.0cm in the TD direction were obtained. In Example 5, two OPPs (thickness: 50µm) of the same type were used and laminated for the B layer; and in Example 6, two CPPs (thickness: 25µm) of the same type were used and laminated for the first A layer and the second A layer. In addition, in Comparative Examples 1 and 2, the second A layer and the B layer were not provided and the separators had a single layer; and in Comparative Example 3, the second A layer was not provided and the separator had two layers. The following evaluations were performed on each of the separators thus obtained, and the results are shown in Table 1.

### [Heat Shrinkage Ratio]

The separator was left in a drying oven adjusted to 145°C for 1 minute without applying tension, and then the separator was taken out from the drying oven and left until the separator was cooled to room temperature, and then the shrinkage ratio in the MD direction was measured. The case where the shrinkage ratio in the MD direction was less than 1% was rated as O, and the case where it was 1% or more was rated as ×.

### [Unlikely Possibility of Occurrences of Curling and Undulation]

The separator was left in a drying oven adjusted to 145°C for 1 minute without applying tension, and then the separator was taken out from the drying oven and left until the separator was cooled to room temperature, and then the occurrences of curling and undulation were visually observed. The one in which curling and undulation were not observed was rated as O, the one in which curling and undulation were slightly observed (the one in which the curling was formed in the form of the letter U) was rated as Δ, and the one in which curling and undulation were significantly observed (the one in which the curling was formed in the form of a spiral) was rated as ×.

### [Suitability for Hot Embossing]

Using a hot pressing machine, the first A layer of the separator and a copper plate on which the grid pattern (the shape of the grid: square; the height of the convex portion: 20µm; the width of the convex portion: 20µm; the distance between the grids: 140µm) was engraved were heated to 140°C and laid to overlap each other, and then the hot pressing was performed at a pressure of 100kgf/cm² for 10 seconds. The separator was taken out from the hot pressing machine, and then it was observed with a laser microscope whether the first A layer was hot-embossed, and the one in which the grid pattern was embossed was rated as O, and the one in which the grid pattern was not embossed was rated as ×.

### [Comprehensive Evaluation]

The comprehensive evaluation judgment was made based on these three test results as described above. As for the comprehensive evaluation, the case where all were O in the three tests as described above was rated as A, the case where a result of Δ was present in addition to O was rated as B, and the case where even one result of × was present was rated as C, and A and B were regarded as the passing grade.

**[Table 1]**

| Table 1 | | Example 1 | Example 2 | Example 3 | Example 4 | Example 5 | Example 6 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|
| Configuration of Separator | the first A layer | CPP | CPP | CPP | unstretched LDPE | CPP | CPP (2 layers) | OPP | CPP | CPP | CPP | PET | unstretched LLDPE |
| | | 25µm | 80µm | 80µm | 200µm | 25µm | 50µm | 50µm | 100µm | 60µm | 25µm | 25µm | 100µm |
| | B layer | OPP | OPP | OPP | OPP | OPP (2 layers) | OPP | - | - | OPP | OPP | OPP | OPP |
| | | 50µm | 50µm | 50µm | 50µm | 100µm | 50µm | - | - | 50µm | 50µm | 50µm | 50µm |
| | the second A layer | CPP | CPP | CPP | unstretched LDPE | CPP | CPP (2 layers) | - | - | - | CPP | PET | CPP |
| | | 25µm | 80µm | 100µm | 200µm | 25µm | 50µm | - | - | - | 100µm | 25µm | 80µm |
| | total thickness (pm) | 100 | 210 | 230 | 450 | 150 | 150 | 50 | 100 | 110 | 175 | 100 | 230 |
| Tension-free Heating 145°C 1min | Unlikely Possibility of Occurrences of Curling and Undulation | ○ | ○ | Δ | Δ | ○ | ○ | ○ | × | × | × | ○ | × |
| | Heat Shrinkage Ratio | ○ | ○ | ○ | ○ | ○ | ○ | × | ○ | × | × | ○ | × |
| Hot Pressing 140°C 10sec 100kgf/cm² | Suitability for Embossing | ○ | ○ | ○ | ○ | ○ | ○ | × | ○ | ○ | ○ | × | ○ |
| Comprehensive Evaluation | | A | A | B | B | A | A | C | C | C | C | C | C |

From the results in Table 1, with regard to Example 1 and Example 2, the unstretched polypropylene was used for the first A layer and the second A layer, and consequently curling and undulation did not occur, and also heat shrinkage did not occur, and the suitability for hot embossing was good, and therefore the comprehensive evaluation was A. With regard to Example 3, although a slight curling was observed because the layer thicknesses of the first A layer and the second A layer were different, the other evaluation items were good, and therefore the comprehensive evaluation was B. With regard to Example 4, although a slight curling was observed because the unstretched low-density polyethylene was used for the first A layer and the second A layer, the other evaluation items were good, and therefore the comprehensive evaluation was B. With regard to Example 5 and Example 6, although the B layer and the A layer were formed by laminating the films of the same type, curling and undulation did not occur, and also heat shrinkage did not occur, and the suitability for hot embossing was good, and therefore the comprehensive evaluation was A.

With regard to Comparative Example 1, the separator did not have suitability for hot embossing because the separator was a single layer of biaxially stretched polypropylene, and therefore the comprehensive evaluation was C. With regard to Comparative Example 2, the occurrence of curling was not observed but undulation occurred by heat because the separator was a single layer of unstretched polypropylene, and therefore the comprehensive evaluation was C. With regard to Comparative Example 3, curling and heat shrinkage occurred because the separator had an unsymmetrical two-layer structure, and therefore the comprehensive evaluation was C. With regard to Comparative Example 4, heat shrinkage and curling occurred because the separator had an unsymmetrical structure in which the thickness of the first A layer was only 25% of the thickness of the second A layer, and therefore the comprehensive evaluation was C. With regard to Comparative Example 5, the separator did not have suitability for hot embossing because the first A layer and the second A layer were biaxially stretched polyethylene terephthalate, and therefore the comprehensive evaluation was C. With regard to Comparative Example 6, curling and heat shrinkage occurred because the types of the bases of the first A layer and the second A layer were different, and therefore the comprehensive evaluation was C.

### Reference Signs List

- 1: adhesive tape or sheet with separator
- 10: separator
- 11: the first A layer
- 12: B layer
- 13: the second A layer
- 20: adhesive tape or sheet
- 21: support layer
- 22: adhesive layer

## Claims

1. An adhesive tape or sheet with a separator comprising
an adhesive tape or sheet comprising a support layer and an adhesive layer laminated on the upper side of the support layer; and
a separator located on the upper side of the adhesive layer,
wherein
the separator has a three-layer structure in which a first A layer, a B layer, and a second A layer are laminated in this order from the lower side;
the first A layer and the second A layer are formed of the same type of unstretched polyolefin film;
the B layer is formed of a biaxially stretched polyolefin film; and
the thickness of the first A layer is 70% or more and 130% or less of the thickness of the second A layer.

2. The adhesive tape or sheet with the separator according to claim 1, wherein the first A layer and the second A layer are formed of the same type of unstretched polypropylene film.

3. The adhesive tape or sheet with the separator according to claim 1 or 2, wherein the B layer is formed of a biaxially stretched polypropylene film.

4. The adhesive tape or sheet with the separator according to any one of claims 1 to 3, wherein the sum of the thicknesses of the first A layer, the B layer, and the second A layer is 50µm or more and 500µm or less.

5. The adhesive tape or sheet with the separator according to any one of claims 1 to 4, wherein the sum of the thicknesses of the first A layer and the second A layer is 20% or more and 90% or less relative to the sum of the thicknesses of the first A layer, the B layer, and the second A layer.

6. The adhesive tape or sheet with the separator according to any one of claims 1 to 5, wherein a straight and/or curved convex portion is formed on the lower surface of the first A layer.

7. The adhesive tape or sheet with the separator according to claim 6, wherein
a grid pattern is formed on the lower surface of the first A layer by the intersecting straight convex portions;
the shape of each grid in the grid pattern is any one of a square, a rectangle, a parallelogram, and a rhombus;
the height of the convex portion is 1µm or more and 20µm or less;
the cross-sectional width of the convex portion is 1µm or more and 50µm or less; and
the distance between the convex portions facing each other in each grid is 100µm or more and 1000µm or less.

8. The adhesive tape or sheet with the separator according to claim 7, wherein the shape of each grid is a parallelogram or a rhombus; and the length of the long side of the diagonal line in each grid is 130% or more and 200% or less relative to the length of the short side of the diagonal line.

9. The adhesive tape or sheet with the separator according to any one of claims 6 to 8, wherein a straight and/or curved convex portion is further formed on the upper surface of the second A layer; and an adhesive layer and a support layer are laminated in this order on the upper side of the second A layer.

10. The adhesive tape or sheet with the separator according to any one of claims 1 to 9, wherein a silicone-based release treatment agent is applied at least on the lower surface of the first A layer.

11. A separator to be located on the upper side of the adhesive layer of an adhesive tape or sheet comprising a support layer and the adhesive layer laminated on the upper side of the support layer,
wherein
the separator has a three-layer structure in which a first A layer, a B layer, and a second A layer are laminated in this order from the lower side;
the first A layer and the second A layer are formed of the same type of unstretched polyolefin film;
the B layer is formed of a biaxially stretched polyolefin film; and
the thickness of the first A layer is 70% or more and 130% or less of the thickness of the second A layer.

12. The separator according to claim 11, wherein a straight and/or curved convex portion is formed on the lower surface of the first A layer.

13. The separator according to claim 12, wherein a straight and/or curved convex portion is further formed on the upper surface of the second A layer.
